Europäisches Patentamt

(19) European Patent Office

Office européen des brevets

(11) Publication number : **0 300 013 B1**

# EUROPEAN PATENT SPECIFICATION

(45) Date of publication of patent specification :
29.04.92 Bulletin 92/18

(51) Int. Cl.[5] : **B23K 9/00, B23K 9/10**

(21) Application number : 88901285.2

(22) Date of filing : 02.02.88

(86) International application number :
PCT/GB88/00064

(87) International publication number :
WO 88/05703 11.08.88 Gazette 88/18

(54) WELDING METHOD AND APPARATUS.

(30) Priority : 03.02.87 GB 8702321

(43) Date of publication of application :
25.01.89 Bulletin 89/04

(45) Publication of the grant of the patent :
29.04.92 Bulletin 92/18

(84) Designated Contracting States :
AT BE CH DE FR IT LI LU NL SE

(56) References cited :
US-A- 3 988 567
US-A- 4 532 405
Machinery and Production Engineering, vol. 144, no. 3687, 5 February 1986, (Horton Kirby, Kent, GB), A. Allcock: "Seam tracking and weld pool trends", pages 46-48, see the whole document

(56) References cited :
Welding International, vol. 1, no. 5, May 1987 (Abington, Cambridge, GB), Wu Lin et al.: "Detection and analysis of weld penetration in stationary TIG arc welding - a preliminary study", (selected from Transactions of the China Welding Institution, vol. 7, no. 2, 1986), pages 475-479, see the whole document
V.D.I.-Zeitschrift, vol. 128, no. 4, February 1986 (Düsseldorf, DE), P. Drews et al.: "Automatisches Schweiss-System ASTRA", pages 123-127, see page 125, paragraph 1.2; figure 6
Welding Production, vol. 33, no. 1, January 1986 (Abington, Cambridge, GB), E.M. Parkhimovich et al.: "Improving the quality of weld metal using a torch with a gas jet emitter", pages 18-19, see the whole document

(73) Proprietor : **NUCLEAR ELECTRIC PLC**
**Bedminster Down Bridgewater Road**
**Bristol BS13 8AN (GB)**

(72) Inventor : **DEAM, Rowan, Thomas**
**11 Southstreet Hythe**
**Southampton (GB)**
Inventor : **SALTER, Robert, John**
**34 Cheviot Drive Dibden**
**Southampton (GB)**

(74) Representative : **Cross, Rupert Edward Blount et al**
**BOULT, WADE & TENNANT 27 Furnival Street**
**London EC4A 1PQ (GB)**

EP 0 300 013 B1

## Description

This invention relates to a method and apparatus for welding.

When two pieces of metal are joined by welding it is generally preferred to obtain a fully fused weld that has an even penetration, the welding operation being controlled in order to avoid under-penetration or blow-through.

A skilled welder can manually effect the necessary control of the welding operation, but it is also known to use automatic control in dependence upon details of parameters of the welding operation.

Known automatic welding operation controllers use radiation reflected from the backface of a weld being produced, that is the bottom of the weld pool formed during the welding operation, in order to control the weld penetration depth. However, such controllers cannot be used when the backface of the weld is inaccessible. Other known controllers use an ultrasonic probe which is contacted with the workpiece near the weld pool to measure weld penetration. However, such controllers have the disadvantage that the probe is generally covered in grease in order to ensure good acoustic coupling, and this grease can contaminate the weld pool. Another known controller disclosed in Welding International Vol 1 No. 5 May 1987 (Abington, Cambridge, GB), Wu Lin et al "Defection and Analysis of Weld Penetration in Stationary TIG Arc Welding - a Preliminary Study", operates by determining weld pool vibration by measuring changes in the arc voltage of the welding apparatus. However, this controller requires the use of a high quality welding power supply in order to maintain a short stable arc and thus ensure an adequate signal to noise ratio in the arc voltage.

A method of monitoring the topography of a weld puddle and using this to control the position of the weld puddle along the seam to be welded, is disclosed in US-A-4532405. This uses an optical system which projects a light pattern such as parallel stripes onto the weld puddle. However, such a system only gives information on the relief of the weld puddle and no information on weld penetration.

According to this invention a method of welding includes the steps of forming a weld pool; causing the weld pool to vibrate; obtaining details of parameters of the weld pool; processing said details to obtain a control signal and controlling weld penetration in response to the control signal; characterised in that the details of parameters of the weld pool are obtained by directing radiation onto the vibrating weld pool surface; collecting modulated radiation reflected from the vibrating weld pool surface; converting the collected radiation into an electrical signal; and processing the electrical signal to provide said details.

Also according to this invention there is provided apparatus for welding comprising means to form a weld pool; vibrating means to cause the weld pool to vibrate; and processing means to obtain details of parameters of the weld pool and produce a control signal for control of weld penetration; characterised by a radiation source to direct radiation onto the vibrating weld pool surface; collection means to collect modulated radiation reflected from the vibrating weld pool surface; and conversion means to convert the collected radiation into an electrical signal; wherein said processing means is adapted to process the electrical signal to obtain the details of the parameters of the weld pool.

The radiation used can be light derived, for example, from a laser or from the welding apparatus used to form the weld pool, or any other suitable radiation from a source thereof.

The method and apparatus of this invention have the advantages that access is required to only the front surface of the weld pool which should always be accessible, that the weld pool will remain uncontaminated, and that a relatively cheap welding power supply can be used.

This invention will now be described by way of example with reference to the drawings, in which:-

Figure 1 is a diagrammatic block diagram of welding apparatus according to the invention;

Figures 2A and 2B illustrate the lowered frequency vibrations possible set up in a penetrated weld pool and an unpenetrated weld pool respectively; and

Figures 3A and 3B illustrate the frequency response of weld pools as shown in Figures 2A and 2B respectively.

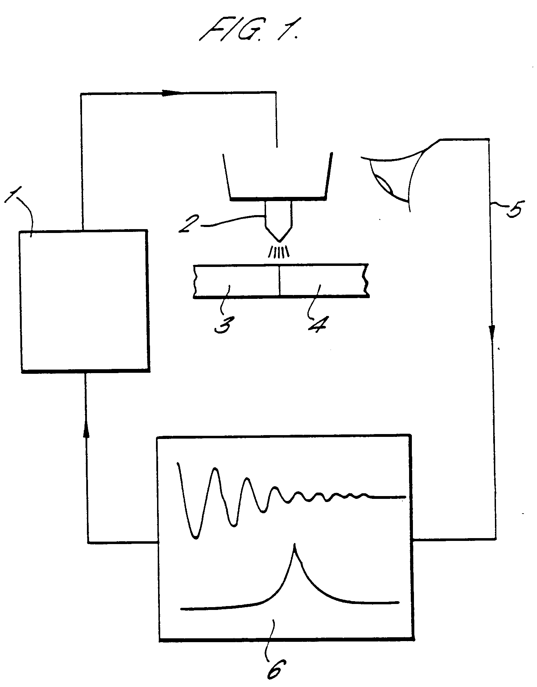

Figure 1 shows welding apparatus comprising a welding power supply 1 and a welding torch 2 being used for welding together two pieces of metal 3 and 4. Light from the torch 2 is reflected from the surface of the weld pool formed by the torch 2 and is collected by an optical fibre collector 5 and transmitted thereby to processing means in the form of a computer 6. The light collected by the optical fibre 5 is converted to an electrical signal by a photodiode arrangement in the processing means 6, the signal then being processed to obtain details of parameters of the weld pool. The weld pool is excited and caused to vibrate by supply of a short high intensity pulse of electric current. Otherwise vibration can be caused by a short reduction in the electric welding current, or by a short pressure pulse in any gas being used in the welding operation. The vibration of the weld pool is characteristic of parameters thereof, for example mass and depth, and the light collected by the optical fibre 5 and the electrical signal obtained therefrom contain these characteristics. The processing means ascertains details of these characteristics and produces a control signal which is used to control the apparatus and thus effect the welding operation as required.

Although in the apparatus described above the light collected by the optical fibre 5 derives from the torch 2, an independent light source, for example in the form of a laser, can otherwise be provided.

Further, although in the apparatus described above visible light is used, it will be appreciated that radiation at any other suitable frequency can otherwise be used.

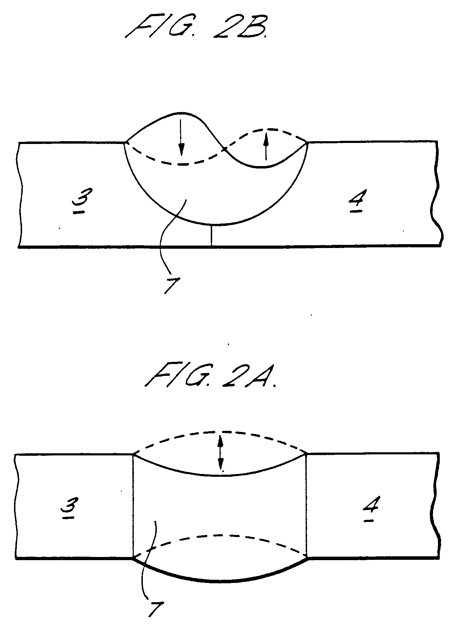

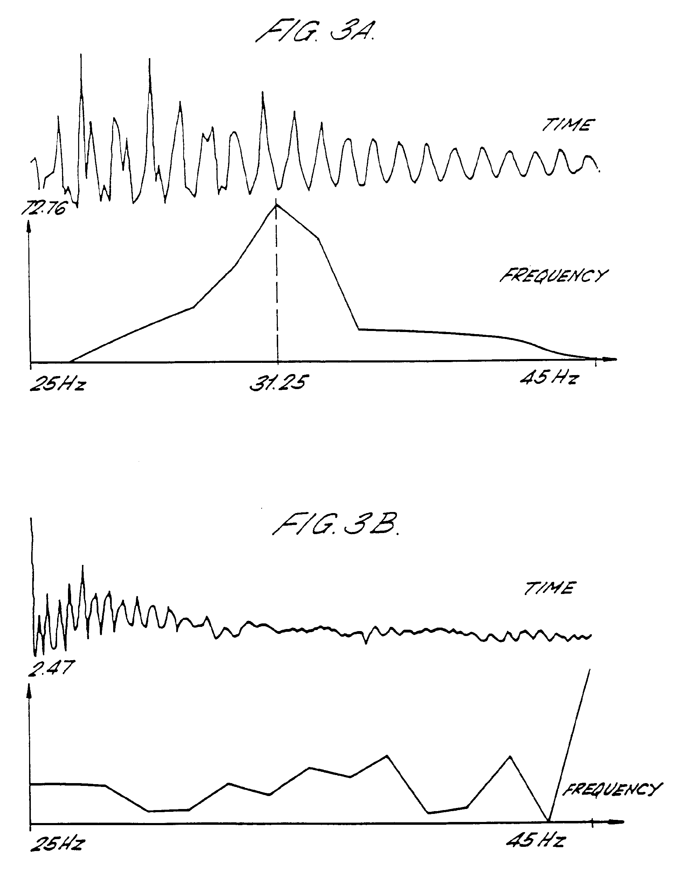

Figures 2A and 2B illustrate the type of vibration set up in a weld pool 7 which has completely penetrated the work pieces 3 and 4, and which has not completely penetrated the work pieces 3 and 4, respectively, while Figures 3A and 3B illustrate the associated frequency response characteristics of the pools of Figures 2A and 2B respectively, from which characteristics the processing means 6 produces the control signal for the power supply 1.

## Claims

1. A method of welding including the steps of forming a weld pool (7) ; causing the weld pool (7) to vibrate; obtaining details of parameters of the weld pool (7) ; processing said details to obtain a control signal and controlling weld penetration in response to the control signal; characterised in that the details of parameters of the weld pool (7) are obtained by directing radiation onto the vibrating weld pool surface; collecting modulated radiation reflected from the vibrating weld pool surface; converting the collected radiation into an electrical signal; and processing the electrical signal to provide said details.

2. A method as claimed in Claim 1, in which the weld pool (7) is caused to vibrate by exciting the weld pool (7) with a short high intensity pulse of electric current.

3. A method as claimed in Claim 1, in which the weld pool (7) is caused to vibrate by a short reduction in the electric welding current.

4. A method as claimed in Claim 1, in which the weld pool (7) is caused to vibrate by a short pressure pulse in gas being used in the welding operation.

5. A method as claimed in any preceding claim, in which the radiation directed onto the weld pool surface is light.

6. A method as claimed in Claim 5, in which the light directed onto the weld pool surface is from a laser.

7. A method as claimed in Claim 5, in which the light directed onto the weld pool surface is from the means (1, 2) used to form the weld pool (7).

8. A method as claimed in Claim 5, Claim 6, or Claim 7 in which the reflected light is collected using an optical fibre (5).

9. A method as claimed in any one of Claims 5 to 8, in which the collected light is converted to an electrical signal using a photodiode (6).

10. A method as claimed in any preceding claim, in which the electrical signal is processed using a computer (6).

11. A method as claimed in any preceding claim, in which the electrical signal is processed to determine the mass of the weld pool (7) and/or depth of the weld pool (7).

12. A method as claimed in any preceding claim, in which the weld penetration is automatically controlled.

13. Apparatus for welding comprising means (1, 2) to form a weld pool (7) ; vibrating means (1) to cause the weld pool (7) to vibrate; and processing means (6) to obtain details of parameters of the weld pool (7) and produce a control signal for control of the weld penetration; characterised by a radiation source (2) to direct radiation onto the vibrating weld pool surface; collection means (5) to collect modulated radiation reflected from the vibrating weld pool surface; and conversion means (6) to convert the collected radiation into an electrical signal; and in that said processing means (6) is adapted to process the electrical signal to obtain said details of the parameters of the weld pool (7).

14. Apparatus as claimed in Claim 13, in which the vibrating means (1) comprises a source providing a short high intensity pulse of electric current with which the weld pool (7) is excited.

15. Apparatus as claimed in Claim 13, in which the vibrating means (1) comprises means to produce a short reduction in the electric welding current.

16. Apparatus as claimed in Claim 13, in which the vibrating means (1) comprises means to produce a short pressure pulse in gas being used in the welding operation.

17. Apparatus as claimed in any one of Claims 13 to 16, in which the radiation source (2) is a laser.

18. Apparatus as claimed in any one of Claims 13 to 16, in which the radiation source (2) is the apparatus (2) used to form the weld pool.

19. Apparatus as claimed in Claim 17 or Claim 18, in which the collection means (5) comprises an optical fibre.

20. Apparatus as claimed in any one of Claims 17 to 19, in which the conversion means (6) comprises a photodiode arrangement.

21. Apparatus as claimed in any one of Claims 13 to 20, in which the processing means (6) comprises a computer.

22. Apparatus as claimed in any one of Claims 13 to 21, including control means (6) operative to effect automatic control of the weld penetration in response to the control signal.

## Patentansprüche

1. Schweißverfahren, welches die Schritte der Bildung eines Schweißbades (7) umfaßt, sowie des in Vibration Versetzens des Schweißbades (7), des Erhalts von genauen Parametern des Schweißbades (7), der Verarbeitung der genauen Angaben zum Erhalt eines Steuersignals und der Regulierung des Schweißeinbrands abhängig vom Steuersignal, dadurch gekennzeichnet, daß die genauen Parameter des Schweißbades (7) erhalten werden, indem Strahlung auf die vibrierende Oberfläche des Schweißbades gelenkt wird, die modulierte Strahlung, die von der vibrierenden Oberfläche des Schweißbades reflektiert wird, aufgefangen wird, die aufgefangene Strahlung in ein elektrisches Signal umgewandelt wird, und das elektrische Signal zur Lieferung dieser genauen Angaben verarbeitet wird.

2. Verfahren nach Anspruch 1, in dem das Schweißbad (7) in Vibration versetzt wird, indem das Schweißbad (7) mit einem kurzen starken Impuls von elektrischem Strom erregt wird.

3. Verfahren nach Anspruch 1, in dem das Schweißbad (7) durch eine kurze Verminderung im elektrischen Schweißstrom in Vibration versetzt wird.

4. Verfahren nach Anspruch 1, in dem das Schweißbad (7) durch einen kurzen Druckimpuls im Gas, das bei dem Schweißvorgang verwendet wird, in Vibration versetzt wird.

5. Verfahren nach einem der vorangehenden Ansprüche, in dem die Strahlung, die auf die Oberfläche des Schweißbades gerichtet wird, Licht ist.

6. Verfahren nach Anspruch 5, in dem das Licht, das auf die Oberfläche des Schweißbades gerichtet wird, von einem Laser stammt.

7. Verfahren nach Anspruch 5, in dem das Licht, das auf die Oberfläche des Schweißbades gerichtet wird, von Mitteln (1,2) stammt, die zur Bildung des Schweißbades (7) verwendet werden.

8. Verfahren nach Anspruch 5, Anspruch 6 oder Anspruch 7, in dem das reflektierte Licht mittels einer optischen Faser (5) aufgefangen wird.

9. Verfahren nach einem der Ansprüche 5 bis 8, in dem das aufgefangene Licht unter Verwendung einer Photodiode (6) in ein elektrisches Signal umgewandelt wird.

10. Verfahren nach einem der vorangehenden Ansprüche, in dem das elektrische Signal unter Verwendung eines Computers (6) verarbeitet wird.

11. Verfahren nach einem der vorangehenden Ansprüche, in dem das elektrische Signal zur Bestimmung der Masse des Schweißbades (7) und/oder der Tiefe des Schweißbades (7) verarbeitet wird.

12. Verfahren nach einem der vorangehenden Ansprüche, in dem der Schweißeinbrand automatisch gesteuert wird.

13. Schweißvorrichtung, welche Mittel (1,2) zur Bildung eines Schweißbades (7) umfaßt, sowie Vibrationsmittel (1), um das Schweißbad (7) in Vibration zu versetzen, und Verarbeitungsmittel (6), um genaue Parameter des Schweißbades (7) zu erhalten und ein Steuersignal zur Regulierung des Schweiffeinbrands zu erzeugen, gekennzeichnet durch eine Strahlungsquelle (2), um Strahlung auf die vibrierende Oberfläche des Schweißbades zu lenken, Auffangmittel (5), um modulierte Strahlung, die von der vibrierenden Oberfläche des Schweißbades reflektiert wird, aufzufangen, und Umwandlermittel (6), um die aufgefangene Strahlung in ein elektrisches Signal umzuwandeln, und dadurch gekennzeichnet, daß das Verarbeitungsmittel (6) zur Verarbeitung des elektrischen Signals ausgebildet ist, um die genauen Parameter des Schweißbades (7) zu liefern.

14. Vorrichtung nach Anspruch 13, in der das Vibrationsmittel (1) eine Quelle umfaßt, die einen kurzen starken Impuls von elektrischem Strom erzeugt, mit dem das Schweißbad (7) erregt wird.

15. Vorrichtung nach Anspruch 13, in der das Vibrationsmittel (1) ein Mittel zur Erzeugung einer kurzen Verminderung im elektrischen Schweißstrom umfaßt.

16. Vorrichtung nach Anspruch 13, in der das Vibrationsmittel (1) ein Mittel zur Erzeugung eines kurzen Druckimpulses in dem Gas umfaßt, das in dem Schweißvorgang verwendet wird.

17. Vorrichtung nach einem der Ansprüche 13 bis 16, in der die Strahlungsquelle (2) ein Laser ist.

18. Vorrichtung nach einem der Ansprüche 13 bis 16, in der die Strahlungsquelle (2) die Vorrichtung (2) ist, die zur Bildung des Schweißbades verwendet wird.

19. Vorrichtung nach Anspruch 17 oder 18, in der das Auffangmittel (5) eine optische Faser umfaßt.

20. Vorrichtung nach einem der Ansprüche 17 bis 19, in der das Umwandlermittel (6) eine Photodiodenanordnung enthält.

21. Vorrichtung nach einem der Ansprüche 13 bis 20, in der das Verarbeitungsmittel (6) einen Computer umfaßt.

22. Vorrichtung nach einem der Ansprüche 13 bis 21, welche Steuermittel (6) beinhaltet, die eine automatische Steuerung des Schweiffeinbrands abhängig vom Steuersignal bewirken.

**Revendications**

1. Procédé de soudage comprenant les phases consistant à : former une masse fondue de soudure (7); amener la masse fondue de soudure (7) à vibrer; obtenir les détails des paramètres de la masse fondue de soudure (7); traiter ces détails pour obtenir un signal de commande, et commander la pénétration de la soudure en réponse au signal de commande, caractérisé en ce que les détails des paramètres de la masse fondue de soudure (7) sont obtenus en dirigeant un rayonnement vers et sur la surface de la masse fondue de soudure en vibration; en recueillant le rayonnement modulé, réfléchi depuis la surface de la masse fondue de soudure en vibration; en convertissant le rayonnement recueilli en un signal électrique; et en traitant le signal électrique pour fournir les détails précités.

2. Procédé suivant la revendication 1, caractérisé en ce que la masse fondue de soudure (7) est amenée à vibrer en excitant la masse fondue de soudure (7) par une courte impulsion de haute intensité d'un courant électrique.

3. Procédé suivant la revendication 1, caractérisé en ce que la masse fondue de soudure (7) est amenée à vibrer grâce à une courte réduction dans le courant électrique de soudage.

4. Procédé suivant la revendication 1, caractérisé en ce que la masse fondue de soudure (7) est amenée à vibrer par une courte impulsion de pression dans le gaz utilisé au cours de l'opération de soudage.

5. Procédé suivant l'une quelconque des revendications précédentes, caractérisé en ce que le rayonnement dirigé vers et sur la surface de la masse fondue de soudure est constitué par une lumière.

6. Procédé suivant la revendication 5, caractérisé en ce que la lumière dirigée vers et sur la surface de la masse fondue de soudure provient d'un laser.

7. Procédé suivant la revendication 5, caractérisé en ce que la lumière dirigée vers et sur la surface de la masse fondue de soudure provient des moyens (1, 2) utilisés pour former la masse fondue de soudure (7).

8. Procédé suivant la revendication 5, la revendication 6 ou la revendication 7, caractérisé en ce que la lumière réfléchie est recueillie en utilisant une fibre optique (5).

9. Procédé suivant l'une quelconque des revendications 5 à 8, caractérisé en ce que la lumière recueillie est convertie en un signal électrique en utilisant une photodiode (6).

10. Procédé suivant l'une quelconque des revendications précédentes, caractérisé en ce que le signal électrique est traité en utilisant un ordinateur (6).

11. Procédé suivant l'une quelconque des revendications précédentes, caractérisé en ce que le signal électrique est traité pour déterminer la masse de la zone de soudure fondue (7) et/ou la profondeur de cette zone (7).

12. Procédé suivant l'une quelconque des revendications précédentes, caractérisé en ce que la pénétration de la soudure est commandée automatiquement.

13. Appareil de soudage, comprenant : des moyens (1, 2) pour former une masse fondue de soudure (7); des moyens de vibration (1) pour amener la masse fondue de soudure (7) à vibrer; et des moyens de traitement (6) permettant d'obtenir les détails des paramètres de la masse fondue de soudure (7) et de produire un signal de commande destiné à commander la pénétration de la soudure, caractérisé en ce qu'il comprend une source de rayonnement (2) destinée à diriger un rayonnement vers et sur la surface de la masse fondue de soudure en vibration, des moyens (5) destinés à recueillir le rayonnement modulé réfléchi depuis la surface de la masse fondue de soudure en vibration, et des moyens de conversion (6) destinés à convertir le rayonnement recueilli en un signal électrique, et en ce que ces moyens de traitement (6) sont adaptés pour traiter le signal électrique en vue d'obtenir les détails susdits des paramètres de la masse fondue de soudure (7).

14. Appareil suivant la revendication 13, caractérisé en ce que les moyens de vibration (1) comprennent une source fournissant une courte impulsion de haute intensité de courant électrique, par laquelle la masse fondue de soudure (7) est excitée.

15. Appareil suivant la revendication 13, caractérisé en ce que les moyens de vibration (1) comprennent des moyens destinés à produire une courte réduction dans le courant électrique de soudage.

16. Appareil suivant la revendication 13, caractérisé en ce que les moyens de vibration (1) comprennent des moyens destinés à produire une courte impulsion de pression dans le gaz utilisé au cours de l'opération de soudage.

17. Appareil suivant l'une quelconque des revendications 13 à 16, caractérisé en ce que la source de rayonnement (2) est un laser.

18. Appareil suivant l'une quelconque des revendications 13 à 16, caractérisé en ce que la source de rayonnement (2) est constituée par l'appareil (2) utilisé pour former la masse fondue de soudure.

19. Appareil suivant la revendication 17 ou la revendication 18, caractérisé en ce que les moyens (5) permettant de récolter le rayonnement consistent en une fibre optique.

20. Appareil suivant l'une quelconque des revendications 17 à 19, caractérisé en ce que les moyens de conversion (6) comprennent un agence ment à photodiode.

21. Appareil suivant l'une quelconque des revendications 13 à 20, caractérisé en ce que les moyens de traitement (6) comprennent un ordinateur.

22. Appareil suivant l'une quelconque des revendications 13 à 21, caractérisé en ce qu'il comprend des moyens de commande (6) aptes à procéder à une commande automatique de la pénétration de la soudure en réponse au signal de commande.

FIG. 1.

FIG. 2B.

FIG. 2A.

FIG. 3A.

72.76

25Hz          31.25          45Hz

TIME

FREQUENCY

FIG. 3B.

2.47

25Hz                          45Hz

TIME

FREQUENCY